# EUROPEAN PATENT APPLICATION

(11) **EP 1 770 004 A2**
(43) Date of publication of application: **04.04.2007**
(21) Application number: 06005088.7
(22) Date of filing: 13.03.2006
(51) Int. Cl.: B62K 25/08

(54) **Front fork**

(30) Priority: 29.09.2005 JP 2005285197
(71) Applicant: SHOWA CORPORATION, Gyoda-shi, Saitama (JP)
(72) Inventor: Murakami, Yosuke, Fukuroi-shi Shizuoka (JP)
(74) Representative: Grünecker, Kinkeldey, Stockmair & Schwanhäusser Anwaltssozietät

(57) **Abstract**

In a front fork, a bottom piece is inserted to an inner periphery of a lower end portion of a damper cylinder, and the lower end portion of the damper cylinder is fixed by caulking to an outer periphery of the bottom piece, and a bottom bolt locked into a bottom portion of the axle side tube is screwed from an outer side with the bottom piece, whereby a lower surface of the bottom piece is fastened to a bottom surface of an axle side tube.

## Description

The present invention relates to a front fork of a motor cycle or the like.

In a front fork, there is a structure in which an axle side tube is slidably fitted to a vehicle body side tube, and a damper cylinder having a bottom piece is provided in a standing manner in a bottom portion of the axle side tube.

As a fixing structure for the bottom piece, Japanese Patent Application Laid-open No. 2003-172392 (patent document 1) describes the followings. A lower end surface of a damper cylinder is brought into contact with a bottom portion (an axle bracket or the like) of the axle side tube. A bottom piece is inserted to an inner periphery of a lower end portion of the damper cylinder. The bottom piece is locked to a stopper ring in an inner periphery of a lower end of the damper cylinder. A bottom bolt engagedly inserted to the bottom portion of the axle side tube from an outer side is screwed with the bottom piece, whereby the damper cylinder is pulled and the lower end surface of the damper cylinder is fastened to the bottom surface of the axle side tube.

The structure described in the patent document 1 has the following problems.
(1) Since the damper cylinder is provided with a groove cross section for forming the stopper ring in addition to a real cross section sufficient for securing the necessary tensile strength of a front fork, it is difficult to make the thickness dimension of the damper cylinder thin.
(2) When the bottom portion of the axle side tube is formed by an aluminum alloy such as the axle bracket or the like, and the damper cylinder is formed of iron, it is necessary to make the surface pressure small which a lower end surface of the damper cylinder applies to the bottom surface of the axle side tube for preventing the lower end surface of the damper cylinder from eating into the bottom surface of the axle side tube. Accordingly, it is difficult to make the thickness dimension of the damper cylinder thin.
(3) Since the lower end surface of the damper cylinder is brought into contact with the bottom surface of the axle side tube, processes of finishing work relating to perpendicularity and surface roughness or the like of the lower end surface of the damper cylinder may be increased.

An object of the present invention is to simplify a finish of a lower end surface of a damper cylinder as well as making a thickness dimension of the damper cylinder thin, when forming the damper cylinder in a standing manner in a bottom portion of an axle side tube, in a front fork.

The present invention relates to a front fork structured such that an axle side tube is slidably fitted to a vehicle body side tube and a damper cylinder is provided in a standing manner in a bottom portion of the axle side tube. A bottom piece is inserted to an inner periphery of a lower end portion of the damper cylinder, and the lower end portion of the damper cylinder is fixed by caulking to an outer periphery of the bottom piece. A bottom bolt engagedly inserted to the bottom portion of the axle side tube from an outer side is screwed to the bottom piece, whereby a lower surface of the bottom piece is fastened to a bottom surface of the axle side tube.

The present invention will be more fully understood from the detailed description given below and from the accompanying drawings which should not be taken to be a limitation on the invention, but are for explanation and understanding only.
The drawings:
FIG. 1 is a sectional view showing a front fork;
FIG. 2 is an enlarged sectional view of a lower portion of the front fork in FIG. 1;
FIG. 3 is an enlarged sectional view of a middle portion of the front fork in FIG. 1;
FIG. 4 is an enlarged sectional view of an upper portion of the front fork in FIG. 1;
FIGS. 5A and 5B show a cap unit assembly, in which FIG. 5A is a sectional view and FIG. 5B is a bottom view;
FIGS. 6A and 6B show a cap, in which FIG. 6A is a sectional view and FIG. 6B is a bottom view;
FIGS. 7A and 7B show an adjuster main body, in which FIG. 7A is a front elevational view and FIG. 7B is a sectional view;
FIG. 8 is a sectional view showing an adjuster collar;
FIG. 9 is a plan view showing a slider;
FIGS. 10A and 10B show a leaf spring, in which FIG. 10A is a plan view and FIG. 10B is a side elevational view;
FIG. 11 is a sectional view showing a damper unit assembly;
FIG. 12 is an enlarged view of a main portion in FIG. 11; and
FIG. 13 is a sectional view showing a bottom valve unit assembly.

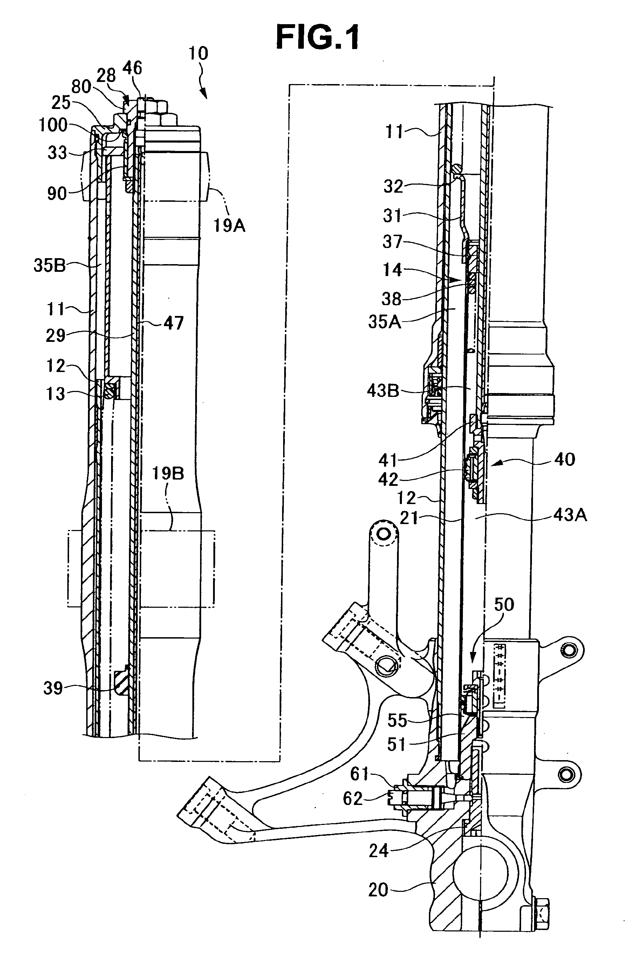

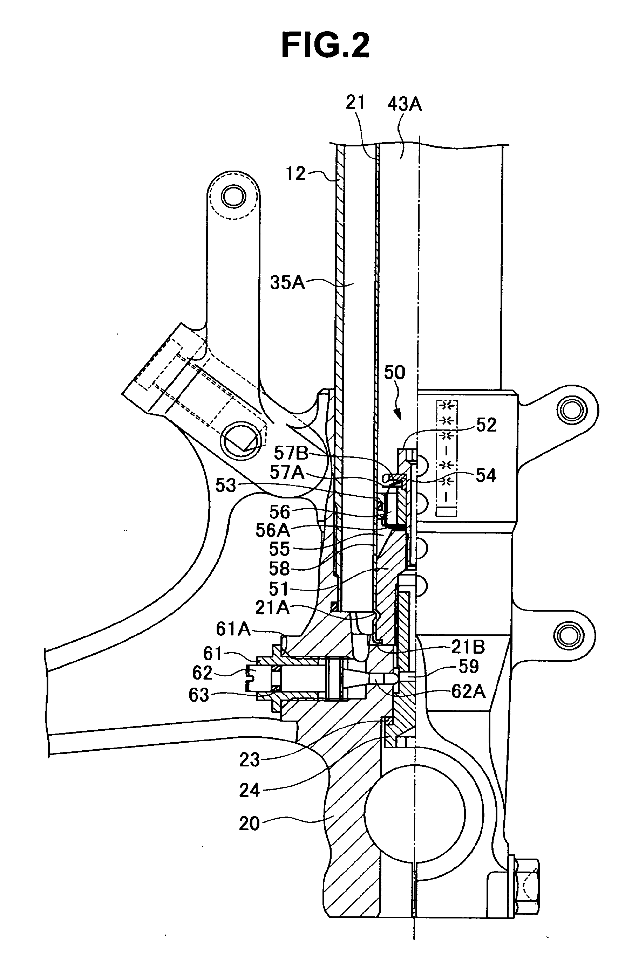

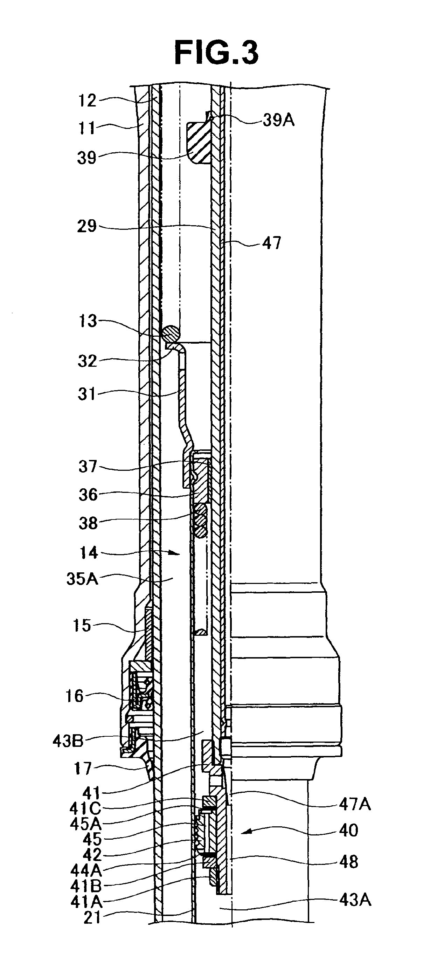

A front fork 10 is structured, as shown in FIGS. 1 to 4, such that a vehicle body side outer tube (a vehicle body side tube) 11 is slidably fitted to an axle side inner tube (an axle side tube) 12 so as to be inverted. A suspension spring 13 is placed between both the tubes 11 and 12, and a single cylinder type damper 14 is incorporated in an erect manner.

A bush 15, an oil seal 16 and a dust seal 17 with which an outer peripheral portion of the inner tube 12 is brought into slidable contact are fitted to an inner peripheral portion of a lower end of the outer tube 11, and a bush 18 with which an inner peripheral portion of the outer tube 11 is brought into slidable contact is fitted to an outer peripheral portion of an upper end of the inner tube 12.

The outer tube 11 is supported to a vehicle body side via an upper bracket 19A and a lower bracket 19B, and the inner tube 12 is coupled to an axle via an axle bracket 20.

A lower end portion of a damper cylinder 21 of the damper 14 is attached to a bottom portion of the inner tube 12 so as to be provided in a standing manner. At this time, the damper cylinder 21 is fixedly held by a bottom bolt 24 engagedly inserted to the axle bracket 20 from an outer side via a bottom piece 51 mentioned below, in a manner mentioned below.

A cylinder portion 25A of a cap 25 is inserted and screwed to an upper end portion of the outer tube 11 via an O-ring 26 in a liquid tight manner, and a spring load adjuster 28 is rotatably inserted to an inner periphery of a cover portion 25B of the cap 25 via an O-ring 27 in a liquid tight manner. A base end portion of a piston rod 29 is screwed to an inner periphery of a lower end of the adjuster 28, and is locked by a lock nut 30. A leading end portion of the piston rod 29 is inserted to the damper cylinder 21.

An oil lock collar 31 is fixed to an outer peripheral portion of an upper end of the damper cylinder 21 in an inner portion of the inner tube 12, and a spring seat 32 is provided in an upper end portion of the oil lock collar 31. On the other hand, a groove portion 25C extending in an axial direction is provided in the inner portion of the outer tube 11 and in an inner periphery of the cylinder portion 25A of the cap 25, and a slider 33 prevented a rotation with respect to the groove portion 25C of the cap 25 is screwed with an outer periphery of the adjuster 28. The slider 33 supports an upper end of the suspension spring 13 via a spring collar 34A, and the spring seat 32 supports a lower end of the suspension spring 13. The slider 33 is moved upward and downward by rotationally operating the adjuster 28, and an initial load of the suspension spring 13 can be set via the spring collar 34A by extension. In this relation, a thread portion of the adjuster 28 and a thread portion of the slider 33 are set as inverse threads moving the slider 33 downward on the basis of a rightward rotation of the adjuster 28 and compressing the suspension spring 13.

An oil reservoir chamber 35A and a gas chamber 35B are provided around an outer peripheral portion of the damper cylinder 21 in the inner portions of the outer tube 11 and the inner tube 12. A gas sealed in the gas chamber 35B structures a gas spring. A working fluid in the oil reservoir chamber 35A contributes to adjustment of a spring constant of the gas chamber 35B, lubrication of the slidable contact bushes 15 and 18 in the outer tube 11 and the inner tube 12, and wetting of the oil seal 16 in the lower end portion of the inner tube 12. Further, an elastic force of the suspension spring 13 and the gas spring absorbs an impact force which a vehicle receives from a road surface.

The damper 14 has a piston valve apparatus (an extension side damping force generating apparatus) 40, and a bottom valve apparatus (a compression side damping force generating apparatus) 50. The damper 14 suppresses a stretching vibration of the outer tube 11 and the inner tube 12 caused by the absorption of the suspension spring 13 and the gas spring, on the basis of damping forces generated by the piston valve apparatus 40 and the bottom valve apparatus 50.

A rod guide 36 is fixed by caulking to an upper end opening portion of the damper cylinder 21, and a bush 37 slidably guiding the piston rod 29 is press-fitted in to the rod guide 36.

In this case, a rebound spring 38 which is compressed with respect to a piston holder 41 mentioned below at a time of being extended at the maximum so as to serve a buffering effect is held just below the rod guide 36 in an inner periphery of the damper cylinder 21.

Further, an oil lock piece 39 held by a stopper ring 39A is installed or fitted (or press-fitted) to the outer periphery of the piston rod 29, and a buffering effect at the maximum compressing point is achieved by entering the oil lock piece 39 into to the oil lock collar 31 mentioned above at maximum compression.

A description will be given below of a damping mechanism of the front fork 10.

### Piston valve apparatus 40:

The piston valve apparatus 40 is structured such that the piston holder 41 is installed to a leading end portion of the piston rod 29, and the piston 42 and a valve stopper 41C are installed by a nut 41A screwed to the piston holder 41 and a valve stopper 41B. The piston 42 is brought into slidable contact with the inner portion of the damper cylinder 21, and sections the inner portion of the damper cylinder 21 into a piston side oil chamber 43A in which the piston rod 29 is not received, and a rod side oil chamber 43B in which the piston rod 29 is received. The piston 42 is provided with an extension side flow path 44 (not shown) which is provided with an extension side valve 44A and can communicate the piston side oil chamber 43A with the rod side oil chamber 43B, and a compression side flow path 45which is provided with a compression side valve (a check valve) 45A and can communicate the piston side oil chamber 43A with the rod side oil chamber 43B.

Further, the piston valve apparatus 40 passes a damping force adjusting tube 47 fixed by caulking to a damping force adjusting rod 46 which is inserted and attached in a liquid tight manner to the adjuster 28 via an O-ring 46A and is screwed so as to be operated from an external portion, through a hollow portion of the piston rod 29. A flow path area of a bypass path 48 between the piston side oil chamber 43A and the rod side oil chamber 43B provided in the piston holder 41 can be adjusted by a needle 47A in a leading end of the damping force adjusting tube 47.

Accordingly, the oil in the piston side oil chamber 43A passes through the compression side flow path 45, opens the compression side valve 45A and is introduced to the rod side oil chamber 43B, when the front fork 10 is compressed.

Further, when the front fork 10 is extended, and a relative speed between the damper cylinder 21 and the piston rod 29 is low, oil in the rod side oil chamber 43B is introduced to the piston side oil chamber 43A through the bypass path 48 in which the needle 47A exists, and the extension side damping force is generated on the basis of a throttle resistance by the needle 47A therebetween. The damping force is adjusted on the basis of a position adjustment of the needle 47A by the damping force adjusting rod 46.

Further, when the front fork 10 is extended, and the relative speed between the damper cylinder 21 and the piston rod 29 is at a middle or high speed, oil in the rod side oil chamber 43B is introduced to the piston side oil chamber 43A while deflecting the extension side valve 44A through the extension side flow path 44, which generates an extension side damping force.

### Bottom valve apparatus 50:

The bottom valve apparatus 50 is structured such that a compression side valve 56A, a valve housing 53 and a valve stopper 54 are held to a bottom piece 51 to which the damper cylinder 21 is fixed as mentioned above, by a bolt 52. The valve stopper 54 holds an extension side valve (a check valve) 57A and a spring 57B with respect to the valve housing 53. The valve housing 53 is sealed to an intermediate portion of the damper cylinder 21 in a liquid tight manner, and sections and forms a bottom valve chamber 55 in a lower side of the piston side oil chamber 43A. The valve housing 53 is provided with a compression side flow path 56 which is provided with the compression side valve 56A and can communicate the piston side oil chamber 43A with the bottom valve chamber 55, and an extension side flow path 57 (not shown) which is provided with the extension side valve 57A and can communicate the piston side oil chamber 43A with the bottom valve chamber 55. The bottom valve chamber 55 can be communicated with the oil reservoir chamber 35A provided around the outer portion of the damper cylinder 21 by an oil path 58 provided in the wall surface of the damper cylinder 21.

Further, a bypass flow path 59 which can communicate the piston side oil chamber 43A with the oil reservoir chamber 35A while bypassing the compression side flow path 56 and the extension side flow path 57 is provided in the axle bracket 20 provided in the bottom portion of the inner tube 12, the bottom bolt 24, the bottom piece 51 and the bolt 52. Further, a damping force adjusting rod 62 is inserted and screwed in a liquid tight manner to a cap 61 inserted to the axle bracket 20 in a liquid tight manner while gripping an O-ring 61A, via an O-ring 63. An area of a flow path of the bypass flow path 59 of the inner tube 12 can be adjusted by a leading end needle 62A of the damping force adjusting rod 62.

Accordingly, the oil at a volumetric capacity at which the piston rod 29 goes into the damper cylinder 21 is discharged to the oil reservoir chamber 35A from the piston side oil chamber 43A through the bypass flow path 59 or to the oil reservoir chamber 35A through the compression side flow path 56, the bottom valve chamber 55 and the oil path 58 in the wall surface of the damper cylinder 21, when the front fork 10 is compressed. Where the relative speed between the damper cylinder 21 and the piston rod 29 is low, the compression side damping force is obtained on the basis of a throttle resistance caused by the needle 62A provided in the bypass flow path 59. The damping force is adjusted on the basis of a position adjustment of the needle 62A by the damping force adjusting rod 62. Further, where the relative speed between the damper cylinder 21 and the piston rod 29 is at a middle or high level, the oil passing through the compression side flow path 56 from the piston side oil chamber 43A deflects the compression side valve 56A so as to be introduced to the bottom valve chamber 55, and generates the compression side damping force.

When the front fork 10 is extended, the oil at a volumetric capacity at which the piston rod 29 goes out of the damper cylinder 21 is flowed back to the piston side oil chamber 43A from the oil reservoir chamber 35A through the bottom valve chamber 55 and the extension side flow path 57.

Accordingly, the front fork 10 executes a damping effect as mentioned below.

### Compression time:

When the front fork 10 is compressed, the compression side damping force is generated by the oil flowing through the compression side valve 56A of the valve housing 53 or the needle 62A, in the bottom valve apparatus 50, and the damping force is generated at a very low level in the piston valve apparatus 40.

### Extension time:

When the front fork 10 is extended, the extension side damping force is generated by the oil flowing through the extension side valve 44A of the piston 42 or the needle 47A, in the piston valve apparatus 40, and the damping force is generated at a very low level in the bottom valve apparatus 50.

The stretching vibration of the front fork 10 is suppressed by the compression side and extension side damping forces.

Accordingly, in the front fork 10, there are structured (A) a mounting structure of the adjuster 28 provided in the cap 25, in a spring load adjusting apparatus of the suspension spring 13, and (B) a standing structure of the damper cylinder 21.

### (A) Mounting structure of adjuster 28

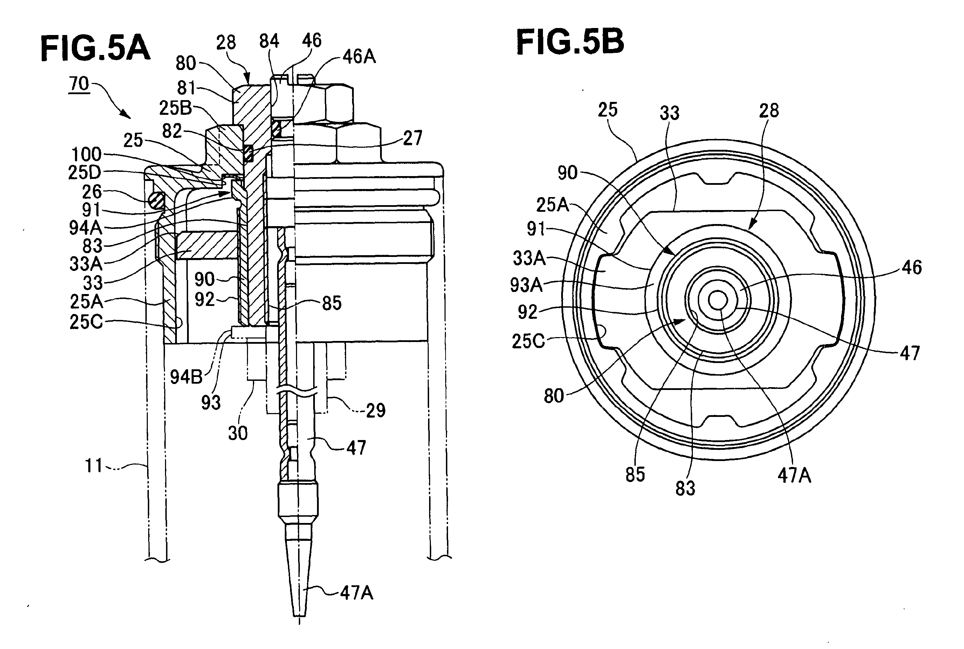

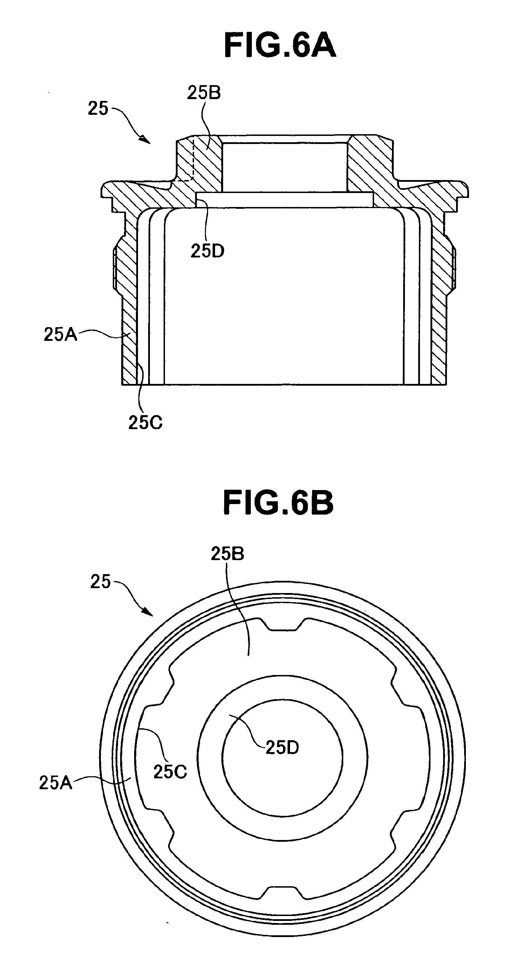

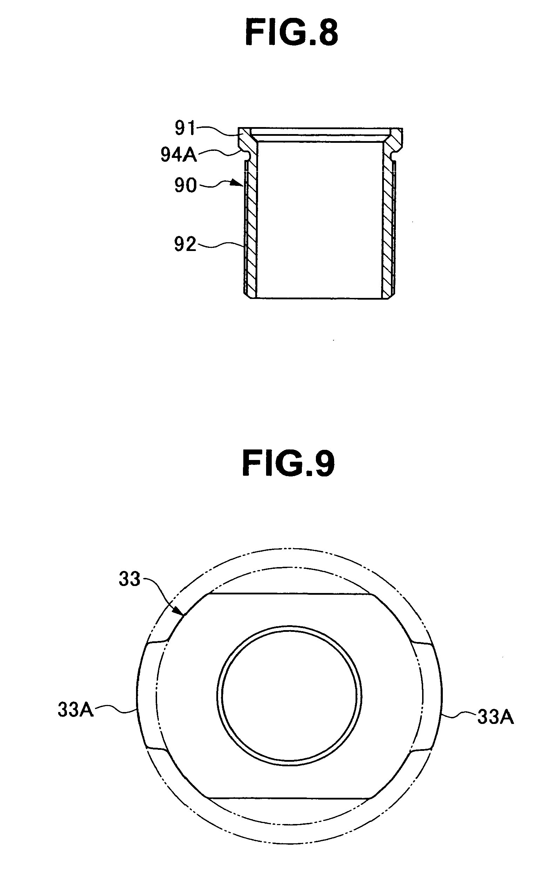

As a cap unit assembly 70 shown in FIGS. 5A and 5B, the cap 25 can be inserted in a liquid tight manner to an upper end portion of the outer tube 11 via the O-ring 26 loaded to an outer peripheral annular groove of the cylinder portion 25A, and the adjuster 28 is rotatably fitted in a liquid tight manner to an inner periphery of the cover portion 25B of the cap 25 via the O-ring 27. The damping force adjusting rod 46 is fitted and screwed in a liquid tight manner to an upper end inner periphery of the adjuster 28 via the O-ring 46A, and the damping force adjusting tube 47 is fixed by caulking to the lower end portion of the damping force adjusting rod 46. The slider 33 (FIG. 9) is screwed to an outer periphery of the adjuster 28. A convex portion 33A protruding to an outer side in a diametrical direction of the slider 33 is engagedly inserted into the groove portion 25C provided in the cylinder portion 25A of the cap 25 (FIGS. 6A and 6B) and extending along an axial direction, and the slider 33 can move upward and downward in a rotation preventing state.

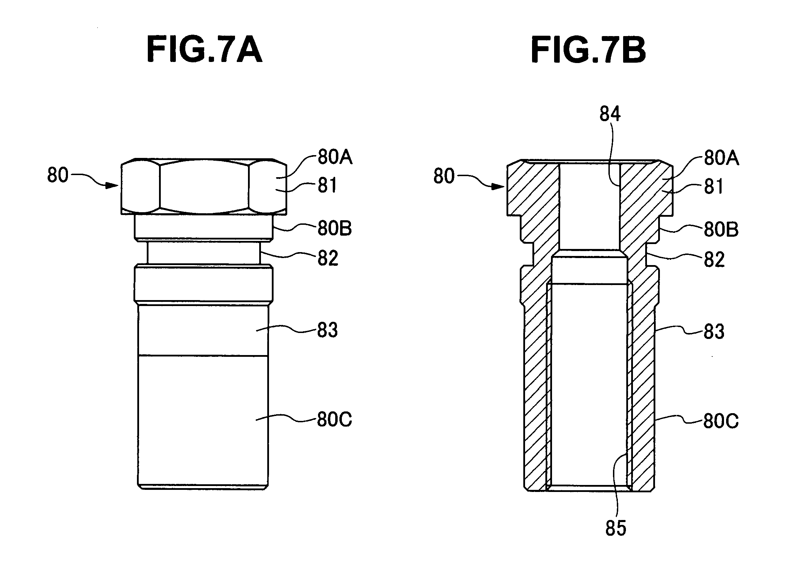

The adjuster 28 has an adjuster main body 80 (FIGS. 7A and 7B) which is rotatably inserted to an inner periphery of the cover portion 25B of the cap 25, and is structured such that an adjuster collar 90 (FIG. 8) is press-fitted to an outer periphery of the adjuster collar main body 80 positioned within the cap 25. The slider 33 is screwed with a screw 92 provided in an outer periphery of the adjuster collar 90.

The adjuster 28 is structured such that a collar-shaped operating portion 81 is integrally formed with an upper end large-diameter outer peripheral portion 80A of the adjuster main body 80 positioned in the outer side of the cover portion 25B of the cap 25. An outer peripheral annular groove 82 for the O-ring 27 is provided in an intermediate middle-diameter outer peripheral portion 80B of the adjuster main body 80 inserted to the cover portion 25B of the cap 25. An approximately upper half portion of a lower end small-diameter outer peripheral portion 80C of the adjuster main body 80 positioned within the cap 25 is set as a press-fitting portion 83 for the adjuster collar 90. The adjuster main body 80 fits the O-ring 46A of the damping force adjusting rod 46 to an upper end small-diameter inner peripheral portion 84 in a liquid tight manner, and screws the damping force adjusting rod 46 to a large-diameter thread portion 85 just below the upper end small-diameter inner peripheral portion 84.

The adjuster 28 is structured such that a large-diameter collar portion 91 is provided in an upper end outer periphery of the adjuster collar 90 press-fitted to the press-fitting portion 83 of the adjuster main body 80, and a thread 92 is formed just below the collar portion 91.

The adjuster 28 is prevented from coming off in the following manner: the adjuster main body 80 is inserted to an inner periphery of the cover portion 25B from an outer side of the cap 25; the intermediate middle-diameter outer peripheral portion 80B is rotatably fitted to the inner periphery of the cover portion 25B via the O-ring 27; the adjuster collar 90 is press-fitted to the press-fitting portion 83 of the adjuster main body 80 positioned in the inner portion of the cap 25; the upper and lower surfaces of the cover portion 25B of the cap 25 are pinched by the collar-shaped operating portion 81 of the adjuster main body 80 and the collar portion 91 of the adjuster collar 90.

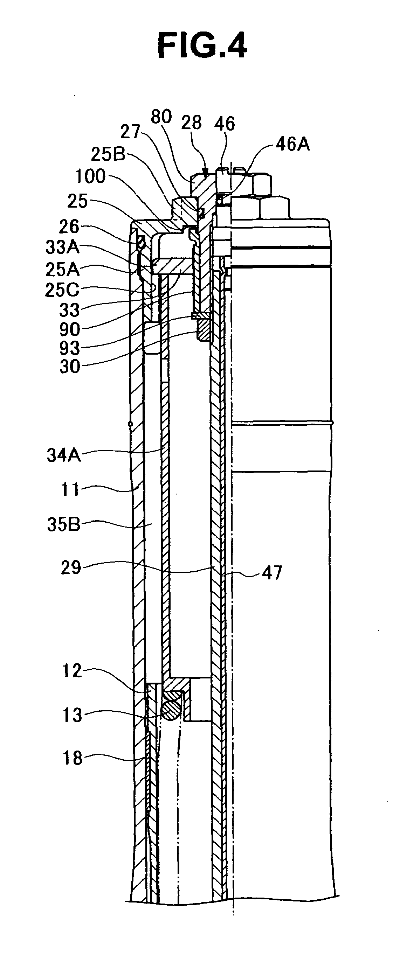

In the adjuster 28, the damping force adjusting rod 46 is inserted to the inner periphery of the adjuster main body 80 from an inner side of the cap 25. The damping force adjusting rod 46 is rotatably fitted to the upper end small-diameter inner peripheral portion 84 of the adjuster main body 80 via the O-ring 46A, and is screwed to the large-diameter thread portion 85. Thereafter, in the adjuster 28, a base end portion of the piston rod 29 of the damper cylinder 21 is screwed to the large-diameter thread portion 85 of the adjuster main body 80. A washer 93 is pinched and locked between the lock nut 30 screwed to the piston rod 29 and the lower end surface of the adjuster main body 80 (FIG. 4). The washer 93 has a larger diameter than the thread 92 of the adjuster collar 90.

In the adjuster 28, the collar portion 91 in the upper portion of the adjuster collar 90 is formed as an upper limit stopper 94A of the slider 33, and the washer 93 in the lower portion of the adjuster collar 90 is formed as a lower limit stopper 94B.

Therefore, in accordance with the present embodiment, the following operations and effects can be achieved.
(a) The slider 33 is screwed to the adjuster collar 90 which is press-fitted to the adjuster main body 80 constituting the adjuster 28 at a certain press-fitting force which leads to a slip at a time when the upward and downward motion of the slider 33 is stopped. Accordingly, within the spring load adjustment range, rotation of the adjuster main body 80 is transmitted to the adjuster collar 90 by the press-fitted coupling force, and moves the slider 33 upward and downward. If the upward and downward motion of the slider 33 is stopped at an upper limit and a lower limit of the spring load adjustment range, the adjuster collar 90 slips with respect to the excessive rotation input to the adjuster main body 80 so as to prevent the adjuster 28 or the like from being broken. The press-fitting force does not disappear after the slip, and the normal spring load adjusting operation is executed within the spring load adjusting range.
(b) Since the upper limit stopper 94A and the lower limit stopper 94B for the slider 33 are provided in the upper and lower sides of the adjuster collar 90, it is possible to securely stop the upward and downward motion of the slider 33 and to lead the adjuster collar 90 to the slip at the upper limit and the lower limit of the spring load adjusting range.
(c) The adjuster 28 is prevented from coming off by integrally forming the collar-shaped operating portion 81 in the adjuster main body 80 positioned in the outer side of the cap 25, and pinching the cover portion 25B of the cap 25 by the collar-shaped operating portion 81 and the adjuster collar 90. Since the collar-shaped operating portion 81 is integrally formed in the adjuster main body 80, it is possible to reduce a risk of coming off of the adjuster 28, and it is possible to reduce a number of the parts, and assembly man hours.
(d) It is possible to securely receive a tensile load in an axial direction applied to the piston rod 29 of the damper cylinder 21 by the collar-shaped operating portion 81 integrally formed in the adjuster main body 80, and therefore it is possible to prevent the adjuster 28 from falling away due to the excessive tensile input to the adjuster main body 80.

Further, the adjuster 28 is structured such that an annular leaf spring 100 is interposed in an elastic compression state between the lower surface of the cover portion 25B of the cap 25 and the upper surface of the collar portion 91 of the adjuster collar 90. An annular concave portion 25D positioning the leaf spring 100 in a radial direction along an outer edge of the leaf spring 100 is provided in the lower surface of the cover portion 25B of the cap 25. The leaf spring 100 is loaded to the annular concave portion 25D of the cap 25.

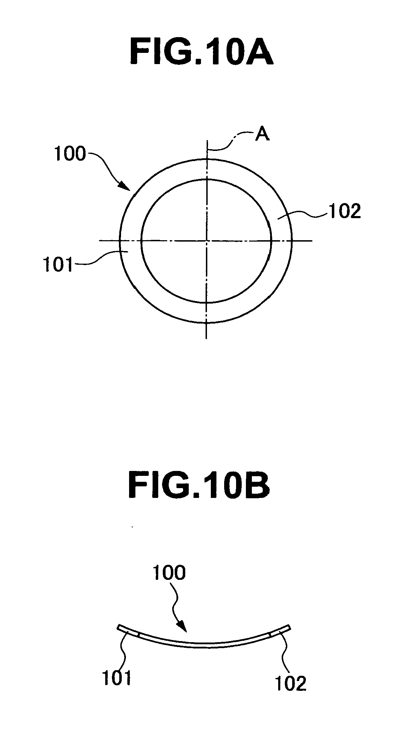

The leaf spring 100 is structured, as shown in FIGS. 10A and 10B, such that a left piece 101 and a right piece 102 with respect to one diametrical line A of an annular disc are curved so as to form a circular arc in a side view, or bent so as to form an L shape with each other. The leaf spring 100 is loaded to the annular concave portion 25D of the cap 25, and brings a center curve convex portion of the circular arc, or a center bent convex portion of the L shape on the diametrical line A into pressure contact with an upper surface of the collar portion 91 of the adjuster collar 90. In this case, the leaf spring 100 may be formed in a disc spring shape.

Therefore, in accordance with the present embodiment, the following operations and effects can be achieved.
(a) Since the leaf spring 100 is interposed between the lower surface of the cover portion 25B of the cap 25 and the adjuster 28, it is possible to absorb assembly play caused by a dimensional difference between the cap 25 and the adjuster 28 by elastic deformation of the leaf spring 100. It is also possible to prevent unexpected rotation of the adjuster 28 due to the vibration by a frictional force which the leaf spring 100 applies to the adjuster 28.
(b) In the structure using the leaf spring 100 mentioned in the item (a), the rotating operation force and the rotating operation position of the adjuster 28 are not affected by a friction and a viscous effect in the O-ring, and it is possible to improve rotating operability of the adjuster 28.
(c) In the structure using the leaf spring 100 mentioned in the item (a), working man hours and assembly man hours are not so necessary as the O-ring, an assembling space can be made small, and it is possible to make the structure compact.

### (B) Standing structure of damper cylinder 21

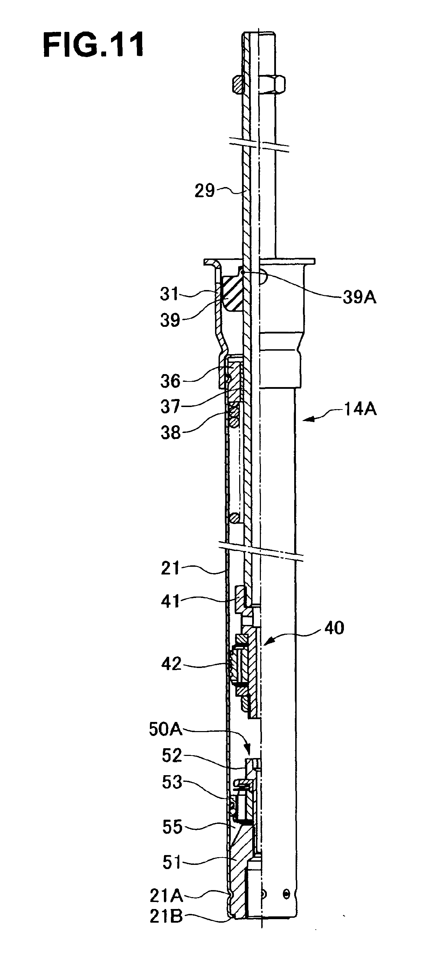

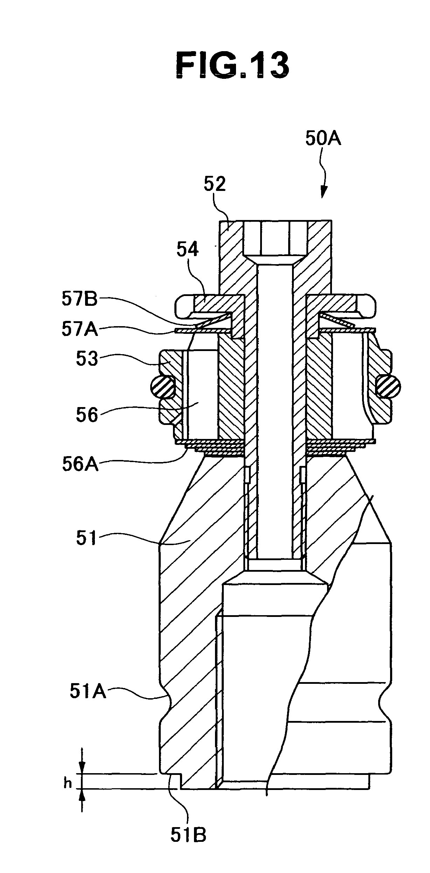

A damper unit assembly 14A shown in FIG. 11 is structured by inserting the piston valve apparatus 40 of the piston rod 29 and others to the damper cylinder 21, fixing the oil lock collar 31 as well as fixing the rod guide 36 by caulking to the upper end portion of the damper cylinder 21, and fixing a bottom valve unit assembly 50A to the lower end portion of the damper cylinder 21. The bottom valve unit assembly 50A is structured, as shown in FIG. 13, by screwing the bolt 52 to an upper thread of the bottom piece 51 and unit assembling the compression side valve 56A, the valve housing 53, the valve stopper 54, the extension side valve (the check valve) 57A and the spring 57B between the bottom piece 51 and the bolt 52.

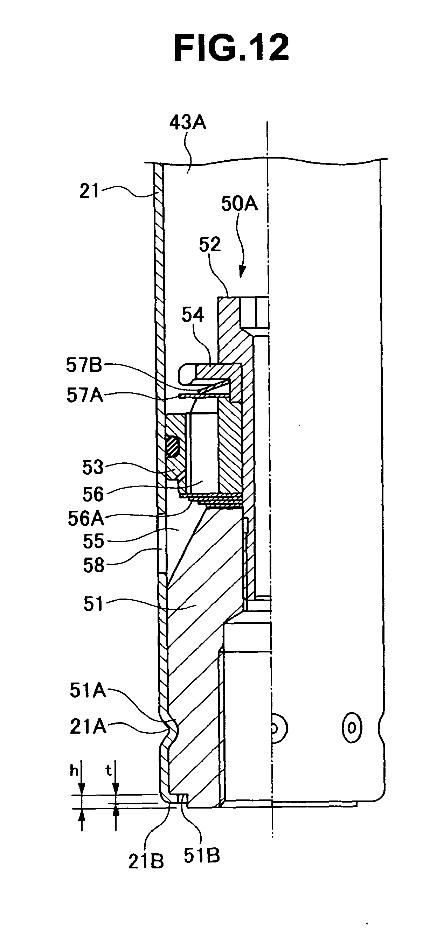

In the damper unit assembly 14A, the bottom piece 51 of the bottom valve unit assembly 50A is inserted to the inner periphery of the lower end portion of the damper cylinder 21, and the lower end portion of the damper cylinder 21 is fixed by caulking to the outer periphery of the bottom piece 51. At this time, as shown in FIGS. 12 and 13, an annularly continuously formed concave groove 51A is provided in the outer periphery of the intermediate portion of the bottom piece 51, and a step 51B (a step amount h) larger than a thickness t of the damper cylinder 21 is provided in the outer periphery of the lower end portion. Further, the lower end portion of the damper cylinder 21 is fixed by caulking to the concave groove 51A of the bottom piece 51 at a caulking portion 21A, and a lowest end portion of the damper cylinder 21 is fixed by caulking to the step 51B of the bottom piece 51 at a caulking portion 21B, whereby the lower end portion of the damper cylinder 21 is fixed by caulking to the outer periphery of the bottom piece 51. The caulking portion 21A is provided at a plurality of positions along the peripheral direction of the damper cylinder 21, or may be continuously provided with an entire periphery of the damper cylinder 21. The caulking portion 21B is provided continuously in the entire periphery of the damper cylinder 21.

The bottom bolt 24 locked into the axle bracket 20 from the outer side is screwed with the lower thread of the bottom piece 51 such that the damper unit assembly 14A is inserted to the inner portion of the inner tube 12, and the lower surface of the bottom piece 51 constituting the damper unit assembly 14A is mounted on the bottom surface of the axle bracket 20. The bottom bolt 24 is locked into a through hole provided in the bottom portion of the axle bracket 20 from the outer side via the seal member 23. Accordingly, the lower surface of the bottom piece 51 is brought into pressure contact with the bottom surface of the axle bracket 20 so as to be fastened.

The axle bracket 20 may be made of an aluminum alloy, and the damper cylinder 21 may be made of an iron.

Therefore, in accordance with the present embodiment, the following operations and effects can be achieved.
(a) The lower end portion of the damper cylinder 21 is fixed by caulking to the outer periphery of the bottom piece 51, and a groove for arranging the stopper ring in the damper cylinder 21 is not necessary. It is possible to make the thickness dimension of the damper cylinder 21 thinner at a degree at which the groove is not necessary. Accordingly, it is possible to reduce the weight and the cost of the front fork 10.
(b) The bottom bolt 24 pulls the bottom piece 51 and fastens the lower surface of the bottom piece 51 to the bottom surface of the axle bracket 20. Since there is absolutely no risk that the lower end surface of the damper cylinder 21 is brought into contact with the bottom surface of the axle bracket 20 so as to eat into the bottom surface, it is possible to make the thickness of the damper cylinder 21 thin. Accordingly, it is possible to reduce the weight and the cost of the front fork 10.
(c) Since the lower end surface of the damper cylinder 21 is not brought into contact with the bottom surface of the axle bracket 20, it is possible to simplify the finishing work regarding the perpendicularity, the surface roughness and others of the lower end surface of the damper cylinder 21.
(d) The lower end portion of the damper cylinder 21 is fixed to the concave groove 51A in the outer periphery of the intermediate portion of the bottom piece 51 by caulking, and the lowest end portion is fixed to the step 51B in the outer periphery of the lower end portion of the bottom piece 51 by caulking, so that the lower end portion of the damper cylinder 21 can be firmly fixed to the outer periphery of the bottom piece 51. Since the step 51B of the bottom piece 51 to which the lowest end portion of the damper cylinder 21 is fixed by caulking is larger than the thickness of the damper cylinder 21, the lowest end portion of the damper cylinder 21 fixed by caulking is received within the step 51B, and does not interfere with the bottom surface of the axle bracket 20.

As heretofore explained, embodiments of the present invention have been described in detail with reference to the drawings. However, the specific configurations of the present invention are not limited to the illustrated embodiments but those having a modification of the design within the range of the presently claimed invention are also included in the present invention. For example, the present invention can be also applied to a conventional front fork.

Although the invention has been illustrated and described with respect to several exemplary embodiments thereof, it should be understood by those skilled in the art that the foregoing and various other changes, omissions and additions may be made to the present invention without departing from the spirit and scope thereof. Therefore, the present invention should not be understood as limited to the specific embodiment set out above, but should be understood to include all possible embodiments which can be encompassed within a scope of equivalents thereof with respect to the features set out in the appended claims.

## Claims

1. A front fork structured such that an axle side tube is slidably fitted to a vehicle body side tube and a damper cylinder is provided in a standing manner in a bottom portion of the axle side tube,
wherein a bottom piece is inserted to an inner periphery of a lower end portion of the damper cylinder, and the lower end portion of the damper cylinder is fixed by caulking to an outer periphery of the bottom piece,
a bottom bolt locked into the bottom portion of the axle side tube is screwed from an outer side with the bottom piece,
whereby a lower surface of the bottom piece is fastenable to a bottom surface of the axle side tube.

2. A front fork as claimed in claim 1, wherein a concave groove is provided in an outer periphery of an intermediate portion of the bottom piece, and a step larger than a thickness of the damper cylinder is provided in an outer periphery of the lower end portion,
whereby the lower end portion of the damper cylinder is fixable by caulking to the outer periphery of the bottom piece by fixing the lower end portion of the damper cylinder to the concave groove of the bottom piece by caulking, and fixing the lowest end portion to the step of the bottom piece by caulking.

3. A front fork as claimed in claim 1 or 2, wherein a bottom valve unit assembly is structured so that a female thread portion is formed in an upper portion of the bottom piece, a bolt is screwed into the upper female thread portion of the bottom piece, and a compression side valve, a valve housing, a valve stopper, an extension side valve and a spring are stacked between the bottom piece and the bolt.

4. A front fork as claimed in claim 2, wherein the caulking portion for fixing the lower end portion of the damper cylinder to the concave groove of the bottom piece by caulking is provided at a plurality of positions along a peripheral direction of the damper cylinder.

5. A front fork as claimed in claim 2, wherein the caulking portion for fixing the lower end portion of the damper cylinder to the concave groove of the bottom piece by caulking is continuously provided in an entire periphery in a peripheral direction of the damper cylinder.
